# NEUE EUROPÄISCHE PATENTSCHRIFT

(11) **EP 3 723 929 B2**
(45) Veröffentlichungstag und Bekanntmachung des Hinweises auf die Entscheidung über den Einspruch: **18.11.2026**
(45) Hinweis auf die Patenterteilung: 18.01.2023
(21) Anmeldenummer: 18796695.7
(22) Anmeldetag: 12.11.2018
(51) Int. Cl.: B23K 101/20, B23K 103/18, B23P 15/32, B23K 1/002

(54) **MEISSELNDES WERKZEUG UND HERSTELLUNGSVERFAHREN**
CHISEL TOOL AND METHOD FOR ITS PRODUCTION
OUTIL DE BURINAGE ET PROCÉDÉ DE FABRICATION

(30) Priorität: 12.12.2017 EP 17206674
(43) Veröffentlichungstag der Anmeldung: 21.10.2020
(73) Patentinhaber: Hilti Aktiengesellschaft, 9494 Schaan (LI)
(72) Erfinder: PIONTEK, Damian, 86836 Untermeitingen (DE); STROISSNIGG, Horst, 86932 Pürgen (DE); HAMMERS, Thilo, 86947 Petzenhausen (DE); GEIRHOS, Johannes, 86862 Lamerdingen (DE); ALLAART, Jan, 9487 Gamprin (LI); MARNETTE, Jascha, 9466 Sennwald (CH)
(74) Vertreter: Hilti Aktiengesellschaft Corporate Intellectual Property
(86) Internationale Anmeldenummer: PCT/EP2018/080898
(87) Internationale Veröffentlichungsnummer: WO 2019/115104

(56) Entgegenhaltungen:
- EP-A1- 2 444 184
- EP-A1- 3 127 672
- EP-A2- 2 564 961
- US-A1- 2014 097 159
- US-A1- 2014 301 798

## Beschreibung

### GEBIET DER ERFINDUNG

Die vorliegende Erfindung betrifft ein meißelndes Werkzeug, insbesondere zum Abbau von mineralischen Bauwerkstoffen und ein Herstellungsverfahren für das Werkzeug.

Meißel und Bohrer zum Bearbeiten von Beton und ähnlichen Bauwerkstoffen sind bekannt. EP 2 444 184 A1 beschreibt einen Bohrer mit einem Bohrkopf aus gesintertem Wolframkarbid und einer Wendel aus Stahl. Der Kopf wird auf die Wendel mit einem Widerstandsschweißverfahren aufgeschweißt. Eine zwischengelegte Eisennickelfolie verbessert den Schweißvorgang. Allerdings zeigen Versuchsreihen, dass die Eisennickelfolie mit einer Dicke von mindestens 0,3 mm durch Materialermüdung aufgrund des Bohrens versagen kann.

### OFFENBARUNG DER ERFINDUNG

Das erfindungsgemäße Herstellungsverfahren für ein meißelndes Werkzeug gemäß dem Anspruch 1 sieht folgende Schritte vor:
Bereitstellen einer aus einem gesinterten Hartmetall gefertigten Werkzeugspitze mit einer Unterseite; Bereitstellen eines aus einem Stahl gefertigten Schafts mit einer Stirnseite; Aufbringen einer Zwischenlage auf eine Seite von Unterseite der Werkzeugspitze oder Stirnseite des Schafts. Die Zwischenlage hat eine Basislage und wenigstens auf der der einen Seite abgewandten Fläche eine Deckschicht. Die Basislage besteht aus der Materialgruppe Nickel, Nickelbasislegierung, Kobaltbasislegierung und Molybdän. Die Basislage hat einen Schmelzpunkt oberhalb von 1300 °C (Grad Celsius). Die Deckschicht besteht aus der Materialgruppe Nickel, Nickelbasislegierung, Kobaltbasislegierung und Molybdän, wobei der Deckschicht zum Absenken der Schmelztemperatur der Deckschicht auf unter 1250 °C Zusatzstoffe aus der Materialgruppe Kupfer, Silber, Gold, Palladium, Bor, Silizium, Phosphor beigemengt sind;
Anpressen der Werkzeugspitze gegen den Schaft mittels einer Presse, induktives Erhitzen einer Fügezone zwischen der Unterseite und der Stirnseite mittels einer Induktionsspule auf eine Temperatur, die oberhalb der Schmelztemperatur der Deckschicht und unterhalb der Schmelztemperatur des Stahls liegt.
Bevorzugte Ausführungsformen der vorliegenden Erfindung sind in den abhängigen Ansprüche definiert.

Das induktive Erhitzen unter der gleichzeitigen Einwirkung des Drucks ergibt eine sehr belastbare Fügezone bei Verwendung einer Fügelage aus der Gruppe Nickel, Nickelbasislegierung, Kobaltbasislegierung und Molybdän. Die Nickelbasislegierung hat einen Anteil von wenigstens 50 %, vorzugsweise wenigstens 75 % Nickel. Die Kobaltbasislegierung hat einen Anteil von wenigstens 50 % Kobalt. Verunreinigungen der Reinmetalle und der Basislegierungen liegen unter 5 %, vorzugsweise unter 2 %, insbesondere für die Basislage.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: einen Bohrer
- Fig. 2: eine Draufsicht auf den Bohrer,
- Fig. 3: eine Seitenansicht auf den Bohrkopf des Bohrers
- Fig. 4: eine Darstellung zu dem Herstellungsverfahren
- Fig. 5: eine Detaildarstellung zu dem Herstellungsverfahren
- Fig. 6: eine Detaildarstellung zu dem Herstellungsverfahren
- Fig. 7: eine Detaildarstellung zu dem Herstellungsverfahren

Gleiche oder funktionsgleiche Elemente werden durch gleiche Bezugszeichen in den Figuren indiziert, soweit nicht anders angegeben. Sofern nicht anders angegeben, beziehen sich Prozentangaben auf das Gewicht.

### AUSFÜHRUNGSFORMEN DER ERFINDUNG

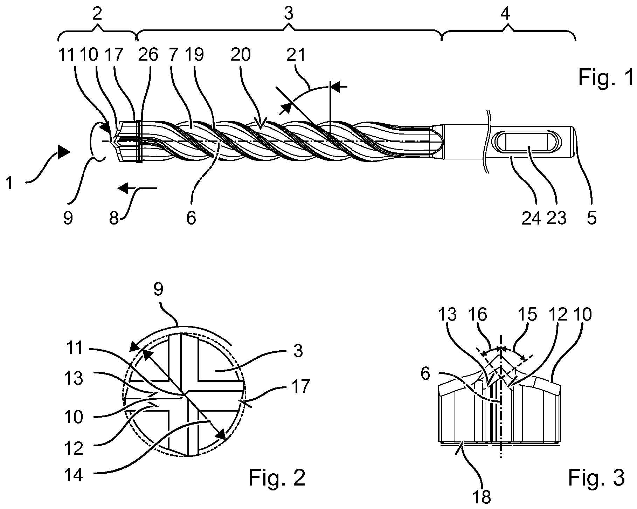

Fig. 1 zeigt einen beispielhaften Bohrer **1.** Der Bohrer **1** hat einen Bohrkopf **2,** einen Förderabschnitt **3** ein Einsteckende **4** und eine Schlagfläche **5.** Eine Bohrerachse **6** des Bohrers 1 verläuft durch den Bohrkopf **2** und die Schlagfläche **5.** Der Bohrer **1** ist beispielsweise für den Abbau von mineralischen Werkstoffen, z.B. armiertem Beton, ausgelegt. Ein Schlagwerk einer Handwerkzeugmaschine schlägt periodisch auf die Schlagfläche **5** an dem Einsteckende **4.** Die Stoßwelle der Schläge läuft durch die Wendel **7** in Schlagrichtung **8** zu dem Bohrkopf **2.** Der Bohrkopf **2** zertrümmert den Werkstoff. Der Bohrer 1 wird während den Schlägen in einem Drehsinn **9** um seine Bohrerachse **6** gedreht. Die Handwerkzeugmaschine weist einen entsprechenden Drehantrieb auf. Die Drehbewegung stellt sicher, dass der Bohrkopf **2** unter verschiedenen Orientierungen auf den Untergrund aufschlägt und das Bohrloch gleichmäßig ausgeschlagen wird.

Der beispielhafte Bohrkopf **2** hat vier Meißelkanten **10.** Die Meißelkanten **10** laufen an einer Spitze **11** auf der Bohrerachse **6** zusammen. Die Spitze **11** ist vorzugsweise der in Schlagrichtung **8** höchste Punkt, welche somit beim Bohren zuerst den Werkstoff kontaktiert. Die Meißelkanten **10** können in radialer Richtung von außen zur Bohrerachse **6** hin längs der Schlagrichtung **8** ansteigen. Die Meißelkanten **10** weisen alle in die Schlagrichtung **8.** Die Meißelkanten **10** können alle gleich ausgestaltet sein, oder paarweise verschieden sein. Die Meißelkante **10** wird durch jeweils eine im Drehsinn **9** vorauslaufende Spanfläche **12** und im Drehsinn **9** nachlaufende Freifläche **13** gebildet. Die Meißelkanten **10** geben den Durchmesser **14** des Bohrers **1** und damit den Durchmesser eine mit dem Bohrer **1** gebohrten Bohrlochs vor. Die Spanfläche **12** und die Freifläche **13** sind zueinander geneigt, der Dachwinkel an der Meißelkante **10** ist größer als 45 Grad, vorzugsweise größer 60 Grad und geringer als 120 Grad. Die Spanfläche **12** ist vorzugsweise weniger gegenüber der Bohrerachse **6** geneigt, wie die Freifläche **13.** Ein Neigungswinkel **15** der Spanfläche **12** gegenüber der Bohrerachse **6** ist geringer als ein Neigungswinkel **16** der Freifläche **13** gegenüber der Bohrerachse **6.** Der Flächeninhalt der Spanfläche **12** ist geringer als der Flächeninhalt der Freifläche **13.** Der Bohrkopf **2** hat vier Abbruchkanten **17,** die parallel zu der Bohrerachse **6** verlaufen. Die Abbruchkanten **17** gehen in die Meißelkanten **10** über. Die Anzahl der Meißelkanten **10** und der Abbruchkanten **17** kann in Abhängigkeit des Durchmessers des Bohrers **1** gewählt sein. Beispielsweise kann bei einem Bohrer **1** geringen Durchmessers der Bohrkopf **2** zwei Meißelkanten **10,** ein Bohrkopf **2** großen Durchmessers mehr als vier Meißelkanten **10** und entsprechende Zahl von Abbruchkanten **17** aufweisen. Der Bohrkopf **2** hat eine ebene Unterseite **18,** welcher von der Spitze **11** abgewandt ist.

Der Förderabschnitt **3** des beispielhaften Bohrers **1** ist durch einen wendelförmigen Schaft **7** (Wendel) gebildet. Die Wendel **7** ist rechtsläufig. Die Wendel **7** bewegt somit das Bohrgut entgegen der Schlagrichtung **8,** wenn der Bohrkopf **2** in dem für ihn vorgesehenen Drehsinn **9,** d.h. im Gegenuhrzeigersinn, gedreht wird. Die Wendel **7** des Bohrers **1** hat beispielsweise vier Wendelstege **19.** Die Anzahl der Wendelstege **19** ist vorzugsweise gleich der Anzahl der Meißelkanten **10.** Die Wendelstege **19** laufen längs der Bohrerachse **6** mehrfach um diese Bohrerachse **6** um. Die Wendelstege **19** beschreiben beim Drehen des Bohrers **1** eine zylindrische Einhüllende, deren Durchmesser einem Wendeldurchmesser entspricht. Jeweils benachbarte Wendelstege **19** schließen zwischen sich eine Wendelnut **20** ein, die in radialer Richtung durch die Einhüllende als geometrisch begrenzt angesehen wird. Das Bohrgut wird in den Wendelnuten **20** durch die Wendelstegen **19** längs der Bohrerachse **6** transportiert. Eine Wendelsteigung **21** liegt vorzugsweise im Bereich zwischen 35 Grad und 60 Grad, z.B. 45 Grad. Die Wendel **7** hat eine ebene Stirnseite **22,** auf welcher die Unterseite **18** des Bohrkopfs angeschweißt ist.

Das beispielhafte Einsteckende **4** des Bohrers **1** ist für die Verwendung von drehmeißelnden Handwerkzeugmaschinen ausgelegt. Das Einsteckende **4** hat eine im Wesentlichen zylindrische Form. Das Einsteckende **4** hat zwei geschlossene Nuten **23,** in welchen Verriegelungselemente der Handwerkzeugmaschine radial eingreifen und längs der Bohrerachse **6** gleiten können. Zur Bohrerachse **6** längs ausgerichtete Rillen **24** ermöglichen ein Einleiten eines Drehmoments von der Handwerkzeugmaschine.

Der Bohrkopf **2** und die Wendel **7** werden separat hergestellt und anschließend gefügt. Zwischen dem Bohrkopf **2** und der Wendel **7** ist eine verbindende Fügelage **26** aus der Gruppe Nickel, Nickelbasislegierung, Kobaltbasislegierung und Molybdän. Die Basislegierungen haben einen Mindestanteil von 50% von Nickel bzw. Kobalt.

Der monolithische Bohrkopf **2** ist aus einem gesinterten Werkstoff hergestellt. Die Meißelkanten **10** und die Abbruchkanten **17** sind vorzugsweise monolithisch zusammenhängend, insbesondere ohne Fügezone miteinander verbunden. Der gesinterte Werkstoff enthält als Hartstoff hauptsächlich oder nur Wolframkarbid, welches in einem metallischen Binder eingebettet ist. Der Hartstoff hat einen Volumenanteil von mehr als 80 % an dem Bohrkopf **2.** Der Binder ist besteht vorzugsweise hauptsächlich aus einem der Metalle Nickel, Kobalt oder deren Legierungen. Der Hartstoff und der Binder werden in Pulverform mit Paraffin vermengt. Die formbare Masse wird zu einem Grünling verpresst, welcher weitgehend der späteren Form des Bohrkopfs **2** entspricht. Das Paraffin wird chemisch oder thermisch herausgelöst. Der Grünling wird bei einer Temperatur zwischen beispielsweise 1300 °C und 1500 °C gesintert.

Die Wendel **7** kann in unterschiedlicher Weise aus einem Rohling hergestellt werden. Der Rohling ist aus einem Stahl, vorzugsweise einem niedriglegierten Der Kohlenstoffgehalt liegt zwischen 0,2 Gew.-% und 0,65 Gew.-%. Zusätze für die Veredlung des Stahls haben einen Anteil von weniger als 5 Gew.-%. Beispiele für den Stahl sind: 45SiCrV6. Die Wendelnuten **20** können gefräst oder umgeformt werden. Ferner kann der Rohling durch eine Matrize gezogen oder gepresst werden. Die Wendel **7** hat eine eben Stirnseite **22,** welche von der Schlagfläche **5** abgewandt ist. Die Oberfläche **27** der Wendel wird thermisch gehärtet oder die Wendel wird durchgehärtet.

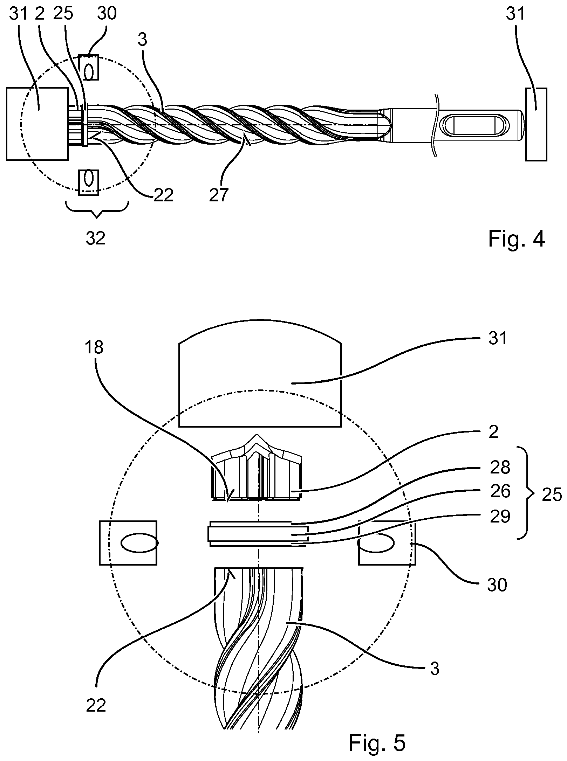

Der Bohrkopf **2** hat eine ebene Unterseite **18,** welche auf die ebene Stirnseite **22** der Wendel **7** aufgesetzt wird. Zwischen dem Bohrkopf **2** und der Wendel **7** wird eine Folie **25** angeordnet (Fig. 5). Die Folie **25** hat eine Dicke von weniger als 0,3 mm, vorzugsweise größer als 0,1 mm. Die Folie **25** besteht aus drei Lagen. Die mittlere (Basis-) Lage **26** ist aus dem Material für die Fügelage **26.** Beispielsweise ist die Basislage **26** aus reinem Nickel. In anderen Ausgestattungen ist die Basislage **26** aus der Gruppe aus einer Nickelbasislegierung mit einem Nickelanteil von wenigstens 50 %, vorzugsweise wenigstens 75 %; aus einer Kobaltbasislegierung mit einem Kobaltanteil von wenigstens 50 %; aus Molybdän. Bedingt durch die Wahl der Materialien und deren Reinheit ist die Schmelztemperatur deutlich über 1300 °C, beispielsweise größer als 1400 °C. Die Basislage **26** ist beidseitig mit einer sehr dünnen Deckschicht **28, 29** bedeckt. Eine Dicke der Deckschichten **28, 29** liegt beispielsweise im Bereich von 1 µm (Mikrometer) bis 30 µm. Der Schmelzpunkt der Deckschichten **28, 29** liegt unterhalb der Schmelztemperatur der Basislage 26. Das Material basiert auf dem Material der Basislage **26,** ist jedoch mit Zusatzstoffen versetzt, um die Schmelztemperatur unter die Schmelztemperatur von Stahl zu senken. Die Zusatzstoffe sind beispielsweise aus der Gruppe Silizium, Bor und Phosphor. Deren Anteil an dem Material liegt im Bereich zwischen 3 % und 15 %.

Zu einer Basislage **26** aus reinem Nickel mit einem Schmelzpunkt von etwa 1450 °C kann eine beispielhafte Deckschicht **29** aus 89 % Nickel, 10,8 % Phosphor, 0,2 % Bor, und Verunreinigungen im Bereich von <0,1% bestehen. Der Schmelzpunkt liegt bei etwa 900 °C. Eine andere beispielhafte Deckschicht **29** besteht aus 93 % Nickel, 3 % Silizium, 4 % Bor und Verunreinigungen im Bereich von <0,1%. Der Schmelzpunkt liegt bei etwa 1020 °C. Die Beispiele dienen der Illustration, dass durch die genannten Zusatzstoffe der Schmelzpunkt in gewünschter Weise angepasst werden kann.

Die Deckschicht bedeckt als sehr dünne Schicht die Basislage aus den vorgenannten Nickel, Nickelbasislegierung oder Kobaltbasislegierung. Eine Stärke der Deckschicht liegt im Bereich zwischen 1 µm und 30 µm.

Die Stirnseite **22** der Wendel **7** und die Unterseite **18** des Bohrkopfs **2** werden mit einer Induktionsspule **30** erhitzt (Fig. 4). Die Induktionsspule **30** erzeugt Wirbelströme in der Wendel **7** und dem Bohrkopf **2,** welche hauptsächlich Grenzflächen, d.h. der Stirnseite **22** und der Unterseite **18,** erhitzen. Der Bereich wird sehr lokal erhitzt. Der Bereich wird auf eine Temperatur zwischen 1050 °C und 1250 °C erhitzt. Ein Wärmesensor und eine Temperaturregelung stellen vorzugsweise die Temperatur ein. Die Temperatur liegt unterhalb der Schmelztemperatur des verwendeten Stahls.

Eine Presse **31** drückt den Bohrkopf **2** an die Wendel **7** an. Der Anpressdruck hängt von dem Durchmesser **14** des Bohrkopfs ab. Der Anpressdruck liegt beispielsweise im Bereich zwischen 5 MPa (Megapascal) und 25 MPa. Der Anpressdruck liegt vorzugsweise oberhalb von 50 % der Fließspannung des Stahls, um eine gute Fügung zu erreichen. Die Fließspannung des Stahls wird nicht überschritten. Der Anpressdruck ist geringer als 90 % der Fließspannung des Stahls bei der über die Induktionsheizung eingestellten Temperatur.

Die Temperatur ist nach oben begrenzt, da unter dem hohen Druck die Wendel bei einer Temperatur von 1250 °C zu fließen beginnt. Die Temperatur liegt deutlich unter dem Schmelzpunkt der mittleren Lage **26,** welche im Fall von reinem Nickel bei 1455 °C liegt. Die Deckschichten **28, 29** schmelzen bei der eingestellten Temperatur an. Die niedriger schmelzenden Deckschichten **28, 29** ermöglichen eine Aktivierung der mittleren Lage **26,** obwohl diese nicht schmilzt. Unter dem Druck der Presse **31** wird der Bohrkopf **2** mit der Wendel 7 verschweißt. Die niedrig schmelzenden Deckschichten **28, 29** werden größtenteils aus der Fügezone verdrängt. Die verbleibt nach dem Fügeprozess in der Fügezone.

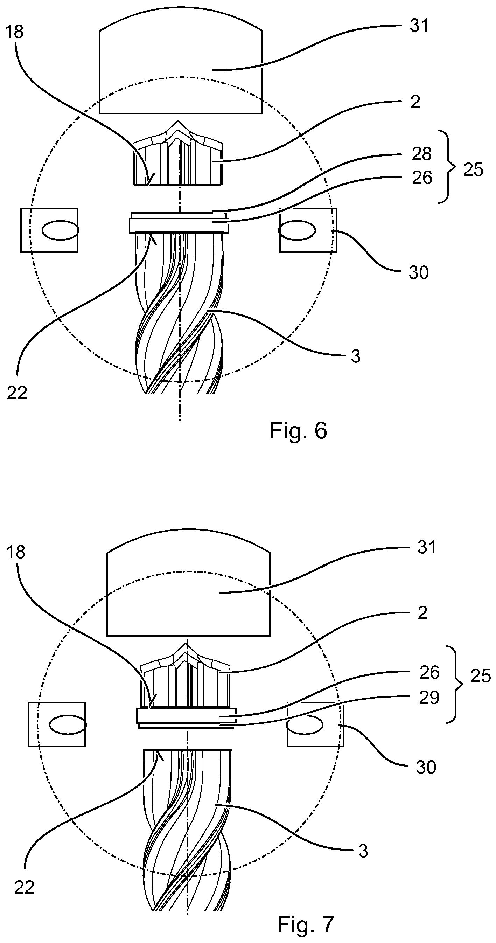

Das Aufbringen der Zwischenlage **25** kann auch epitaktisch oder galvanisch erfolgen. Beispielsweise kann auf die Stirnseite **22** der Wendel **7** die Basislage **26** aufgewachsen werden (Fig. 6). Die freie Oberseite der Basislage **26** wird mit der Deckschicht **28** versehen. Die Deckschicht **28** kann ebenfalls epitaktisch oder galvanisch aufgebracht werden. Oder die freiliegende Seite der Basislage **26** wird durch chemische Nachbehandlung gezielt verunreinigt, um die Zusatzstoffe an der Oberfläche einzubringen. Analog kann die Zwischenlage **25** auf der Unterseite **18** des Bohrkopfs **2** galvanisch oder epitaktisch aufgebracht werden (Fig. 7).

Gesintertes Wolframkarbid lässt sich nur bedingt auf Stahl aufschweißen. Die Fügezone **32** ist empfindlich gegenüber thermomechanischen Spannungen. Die Fügezone **32** reißt unter Anderem bereits bei der ersten Benutzung des Bohrers **1.** Während des meißelnden Abbaus eines Untergrunds heizt sich der Bohrer **1** stark auf. In Pausen kühlt der Bohrer **1** in undefinierter Weise ab.

Das Induktionsschweißen mit einer Zwischenlage erweist sich gegenüber einem Widerstandsschweißen als sehr vorteilhaft. Die Zwischenlage verhindert zum einen die Bildung spröder intermetallischer Phasen, zum anderen werden die thermisch induzierten Eigenspannungen durch die duktile Zwischenlage reduziert. Aufgrund der induktiven Energieübertragung werden keine sauberen Flächen zur Kontaktierung benötigt, dadurch können auch warmumgeformte Stahlwendeln ohne Vorbehandlung gefügt werden. Lediglich die Stirnseite der Wendel muss vor dem Fügen vorbereitet werden.

Die Belastbarkeit der Verbindung zwischen dem Schaft **7** und dem Bohrkopf **2** wurde in Testsystemen untersucht. Der Schaft **7** und der Bohrkopf **2** sind durch zwei Stahlzylinder mit einer Länge von 70 mm und einer Stirnseite von etwa 120 mm² sowie einem Hartmetallzylinder der Länge 10 mm approximiert. Die für Bohrer und Meißel geeigneten Stähle, d.h. gegenüber Schlagbeanspruchung zähe Werkzeugstähle, zeigen in ihrem Fügeverhalten mit dem gesinterten Hartmetall nur geringfügige Unterschiede, ein Beispiel für diese Stähle ist 45SiCrV6. Das Hartmetall ist gesintertes Wolframkarbid in einer metallischen Matrix basierend auf Nickel oder Kobalt. Unterschiedliche Fügelagen wurden untersucht.

In einem Vergleichsexperiment ist der Bohrkopf unmittelbar, d.h. ohne Fügelage, auf den Schaft gefügt. Der Verbund wurde bei einem Druck von 20 MPa und einer Temperatur von 1200°C für etwa 1 min gehalten. Eine Zugfestigkeit des Prüfkörper lag mit einer großen Streuung der Proben zwischen 230 MPa und 360 MPa, deutlich unter 400 MPa.

Bei einem Fügeversuch mit einer Deckschicht **29** aus Nickel-Phosphor auf einer Nickel-Folie wurden Proben mit einer Zugfestigkeit von bis zu 700 MPa gefügt. Die Zugfestigkeit des Gefüges kann die Zugfestigkeit von Nickel, zwischen 400 MPa und 500 MPa, übertreffen. Der Effekt ist nicht vollständig verstanden, es wird vermutet, dass sich ein mehrachsiger Spannungszustand infolge unterschiedlicher Steifigkeiten der Komponenten (Folie, Hartmetall und Stahl) einstellt.

## Patentansprüche

1. Herstellungsverfahren für ein meißelndes Werkzeug (1) mit den Schritten:
Bereitstellen einer aus einem gesinterten Hartmetall gefertigten Werkzeugspitze (2) mit einer Unterseite (18),
Bereitstellen eines aus einem Stahl gefertigten Schafts (7) mit einer Stirnseite (22), Aufbringen einer Zwischenlage (25) auf eine Seite von Unterseite (18) der Werkzeugspitze (2) oder Stirnseite (22) des Schafts (7), wobei die Zwischenlage (25) eine Basislage (26) und wenigstens auf der der einen Seite abgewandten Fläche eine Deckschicht (28, 29) aufweist, wobei die Basislage (26) aus der Materialgruppe Nickel, Nickelbasislegierung, Kobaltbasislegierung und Molybdän besteht und die Basislage (26) einen Schmelzpunkt oberhalb von 1300 °C aufweist, und wobei die Deckschicht (29) aus der Materialgruppe Nickel, Nickelbasislegierung, Kobaltbasislegierung und Molybdän besteht und der Deckschicht (29) zum Absenken der Schmelztemperatur der Deckschicht (28, 29) auf unter 1250 °C Zusatzstoffe aus der Materialgruppe Kupfer, Silber, Gold, Palladium, Bor, Silizium, Phosphor beigemengt sind,
Anpressen der Werkzeugspitze (2) gegen den Schaft (7) mittels einer Presse (31), induktives Erhitzen einer Fügezone (32) zwischen der Unterseite (18) und der Stirnseite (22) mittels einer Induktionsspule (30) auf eine Temperatur, die oberhalb der Schmelztemperatur der Deckschicht (29) und unterhalb der Schmelztemperatur des Stahls liegt.

2. Herstellungsverfahren nach Anspruch 1, **dadurch kennzeichnet, dass** die Zwischenlage (25) als Folie (25) auf die eine Seite vor dem Verpressen aufgelegt wird.

3. Herstellungsverfahren nach Anspruch 2, **dadurch kennzeichnet, dass** die Zwischenlage (25) auf beiden gegenüberliegenden Flächen mit der Deckschicht (28, 29) bedeckt ist.

4. Herstellungsverfahren nach Anspruch 1, **dadurch kennzeichnet, dass** die Zwischenlage epitaktisch oder galvanisch auf die eine der Seiten aufgebracht wird.

5. Herstellungsverfahren nach einem der vorhergehenden Ansprüche, **dadurch kennzeichnet, dass** die Zusatzstoffe Silizium, Bor und Phosphor insgesamt einen Anteil von 3 % und 15 % an der Deckschicht (28, 29) haben.

6. Herstellungsverfahren nach einem der vorhergehenden Ansprüche, **dadurch kennzeichnet, dass** die Zusatzstoffe Kupfer, Silber, Gold, Palladium einen Anteil von über 40 % an der Deckschicht (28, 29) haben.

7. Herstellungsverfahren nach einem der vorhergehenden Ansprüche, **dadurch gekennzeichnet, dass** die Stirnseite (22) und die Unterseite (18) eben sind.

8. Herstellungsverfahren nach einem der vorhergehenden Ansprüche, **dadurch kennzeichnet, dass** das Hartmetall einen Anteil von wenigstens 80 % Wolframkarbid aufweist.

9. Herstellungsverfahren nach einem der vorhergehenden Ansprüche, **dadurch kennzeichnet, dass** die Zwischenlage (25) eine Dicke zwischen 0,05 mm und 0,3 mm aufweist.

10. Herstellungsverfahren nach Anspruch 9, **dadurch kennzeichnet, dass** die Deckschicht (28, 29) eine Dicke zwischen 1 µm und 30 µm aufweist.

## Claims

1. Production method for a chiseling tool (1), having the following steps:
providing a tool tip (2), which is produced from a sintered hard metal and has a bottom side (18),
providing a shaft (7), which is produced from a steel and has a front side (22), applying an intermediate layer (25) to one side of either the bottom side (18) of the tool tip (2) or the front side (22) of the shaft (7), wherein the intermediate layer (25) has a base layer (26) and, at least on the surface facing away from the one side, a cover layer (28, 29), wherein the base layer (26) consists of the material group of nickel, nickel-based alloy, cobalt-based alloy and molybdenum and the base layer (26) has a melting point above 1300°C, and wherein the cover layer (29) consists of the material group of nickel, nickel-based alloy, cobalt-based alloy and molybdenum, and additives from the material group of copper, silver, gold, palladium, boron, silicon and phosphorus are added to the cover layer (29) in order to lower the melting temperature of the cover layer (28, 29) to below 1250°C,
pressing the tool tip (2) against the shaft (7) by means of a press (31),
inductively heating a joining zone (32) between the bottom side (18) and the front side (22) to a temperature which is above the melting temperature of the cover layer (29) and below the melting temperature of the steel by means of an induction coil (30).

2. Production method according to Claim 1, **characterized in that** the intermediate layer (25) is placed as a foil (25) on the one side before the pressing operation.

3. Production method according to Claim 2, **characterized in that** the intermediate layer (25) is covered on both opposite surfaces with the cover layer (28, 29).

4. Production method according to Claim 1, **characterized in that** the intermediate layer is applied epitaxially or by electrodeposition to the one side of the sides.

5. Production method according to any one of the preceding claims, **characterized in that** the additional materials silicon, boron, and phosphorus make up a total of 3% and 15% of the cover layer (28, 29).

6. Production method according to any one of the preceding claims, **characterized in that** the additional materials copper, silver, gold, and palladium make up over 40% of the cover layer (28, 29).

7. Production method according to any one of the preceding claims, **characterized in that** the front side (22) and the bottom side (18) are flat.

8. Production method according to any one of the preceding claims, **characterized in that** the hard metal is at least 80% tungsten carbide.

9. Production method according to any one of the preceding claims, **characterized in that** the intermediate layer (25) has a thickness of between 0.05 mm and 0.3 mm.

10. Production method according to Claim 9, **characterized in that** the cover layer (28, 29) has a thickness of between 1 µm and 30 µm.

## Revendications

1. Procédé de fabrication pour un outil de burinage (1) comportant les étapes:
mise à disposition d'une pointe d'outil (2) fabriquée à partir d'un métal dur fritté comportant une face inférieure (18),
mise à disposition d'une tige (7) fabriquée à partir d'un acier comportant une face frontale (22),
application d'une couche intermédiaire (25) sur une face de la face inférieure (18) de la pointe d'outil (2) ou de la face frontale (22) de la tige (7), la couche intermédiaire (25) présentant une couche de base (26) et, au moins sur la surface opposée à la face, une couche de recouvrement (28, 29), la couche de base (26) étant constituée du groupe de matériaux composé par le nickel, un alliage à base de nickel, un alliage à base de cobalt et le molybdène et la couche de base (26) présentant un point de fusion supérieur à 1300 °C, et la couche de recouvrement (29) étant constituée du groupe de matériaux composé par le nickel, un alliage à base de nickel, un alliage à base de cobalt et le molybdène et des additifs du groupe de matériaux composé par le cuivre, l'argent, l'or, le palladium, le bore, le silicium, le phosphore étant ajoutés à la couche de recouvrement (29) pour abaisser la température de fusion de la couche de recouvrement (28, 29) à une température inférieure 1250 °C,
pression de la pointe d'outil (2) contre la tige (7) au moyen d'une presse (31), chauffage par induction d'une zone d'assemblage (32) entre la face inférieure (18) et la face frontale (22) au moyen d'une bobine d'induction (30) à une température qui est supérieure à la température de fusion de la couche de recouvrement (29) et inférieure à la température de fusion de l'acier.

2. Procédé de fabrication selon la revendication 1, **caractérisé en ce que** la couche intermédiaire (25) est disposée en tant que feuille (25) sur la face avant l'assemblage par pression.

3. Procédé de fabrication selon la revendication 2, **caractérisé en ce que** la couche intermédiaire (25) est recouverte par la couche de recouvrement (28, 29) sur les deux surfaces opposées.

4. Procédé de fabrication selon la revendication 1, **caractérisé en ce que** la couche intermédiaire (25) est appliquée de manière épitaxiale ou de manière galvanique sur l'une des faces.

5. Procédé de fabrication selon l'une quelconque des revendications précédentes, **caractérisé en ce que** les additifs silicium, bore et phosphore possèdent au total une proportion de 3 % et 15 % par rapport à la couche de recouvrement (28, 29).

6. Procédé de fabrication selon l'une quelconque des revendications précédentes, **caractérisé en ce que** les additifs cuivre, argent, or, palladium possèdent une proportion supérieure à 40 % par rapport à la couche de recouvrement (28, 29).

7. Procédé de fabrication selon l'une quelconque des revendications précédentes, **caractérisé en ce que** la face frontale (22) et la face inférieure (18) sont planes.

8. Procédé de fabrication selon l'une quelconque des revendications précédentes, **caractérisé en ce que** le métal dur présente une proportion d'au moins 80 % de carbure de tungstène.

9. Procédé de fabrication selon l'une quelconque des revendications précédentes, **caractérisé en ce que** la couche intermédiaire (25) présente une épaisseur comprise entre 0,05 mm et 0,3 mm.

10. Procédé de fabrication selon la revendication 9, **caractérisé en ce que** la couche de recouvrement (28, 29) présente une épaisseur comprise entre 1 µm et 30 µm.
